# EUROPEAN PATENT APPLICATION

(11) **EP 2 770 441 A1**
(43) Date of publication of application: **27.08.2014**
(21) Application number: 13196113.8
(22) Date of filing: 06.12.2013
(51) Int. Cl.: G06F 13/12, G06F 1/32

(54) **Data storage apparatus**

(30) Priority: 22.02.2013 JP 2013033261
(71) Applicant: Buffalo Inc., Nagoya-shi, Aichi 460-8315 (JP)
(72) Inventor: Ishidoshiro, Takashi, Nagoya-shi, Aichi 460-8315 (JP)
(74) Representative: Huebner, Stefan Rolf

(57) **Abstract**

A data storage apparatus includes a storage block
(12) that stores multimedia data; a control block (11) that executes a read/write operation with multimedia data; an input/output block (15) that executes a data input/output operation between the control block (11) and an external apparatus; a dedicated output block (14, 17) that reads the multimedia data stored in the storage block (12) and output the read multimedia data to an external multimedia-compatible device without control of the control block (11); and a second control block (17) that executes one of operations of stopping and starting operations of the control block (11) and the input/output block (15).

## Description

### Field of the Invention

The present disclosure relates to a data storage apparatus configured to store multimedia data.

### Background of the Invention

Data storage apparatuses are known in which digital audio or music data are stored in storage means such as a hard disk drive for example, these data are read from the storage means through a control device such as a CPU (Central Processing Unit) at the time of music reproduction, and the read data are outputted to an audio apparatus.

In addition, a technology is disclosed in Japanese Patent Laid-open No. 2004-086439 in which, in reading or writing data from or to a hard disk drive of any of the above-mentioned apparatuses, a control signal is generated so as to execute a read or write operation in the PIO (Programmed I/O) mode by bypassing the CPU, thereby saving the power dissipation by putting the CPU in the sleep mode while executing a read or write operation in the PIO mode.

On the other hand, devices are known in which multimedia data to be reproduced is stored in a memory, a reproduction signal is generated through a D/A (Digital/Analog) converter, and this reproduction signal is outputted. In this case, operation noise of the CPU that executes a data read or write operation from or to the memory may be superimposed on the output signal.

Therefore, the present disclosure addresses the above-identified and other problems associated with related-art methods and apparatuses and solves the addressed problems by providing a data storage apparatus configured to suppress the superimposition of CPU operation noise onto an output signal.

### Summary of the Invention

In carrying out the disclosure and according to an embodiment thereof, there is provided a data storage apparatus. This data storage apparatus has a storage block arranged to store multimedia data; a control block arranged to execute a read/write operation with multimedia data; an input/output block arranged to execute a data input/output operation between the control block and an external apparatus; a dedicated output block arranged to read the multimedia data stored in the storage block and to output the read multimedia data to an external multimedia-compatible device without the control of the control block; and an operation control block arranged to execute one of the operations of stopping and starting operations of the control block and the input/output block.

An operation of the above-mentioned operation control block suppresses the superimposition of a noise generated by the above-mentioned control block onto signals that are outputted to multimedia-compatible devices.

The data storage apparatus further has a clock generation block arranged to supply a clock signal to the control block. The control block operates on the basis of a clock signal generated by the clock generation block. The operation control block stops the clock generation block when stopping an operation of the control block. Consequently, the superimposition of the noise generated by the clock generation block is suppressed.

In addition, the above-mentioned dedicated output block may have a counter indicative of data storage locations in the storage block and a signal output block arranged to output a read signal from a data storage location indicated by this counter. This simple configuration of the dedicated output block allows the suppression of the noise generated by this dedicated output block.

Consequently, the present disclosure allows the suppression of the superimposition of CPU operation noise onto an output signal.

### Brief Description of the Drawings

FIG. 1 is a block diagram illustrating an exemplary configuration of a data storage apparatus practiced as a preferred embodiment of the present disclosure;
FIG. 2 is a block diagram illustrating an exemplary configuration of a second control block of the data storage apparatus shown in FIG. 1; and
FIG. 3 shows a list of start addresses of multimedia data stored in the second control block shown in FIG. 2 of the data storage apparatus shown in FIG. 1.

### Detailed Description of a Preferred Embodiment

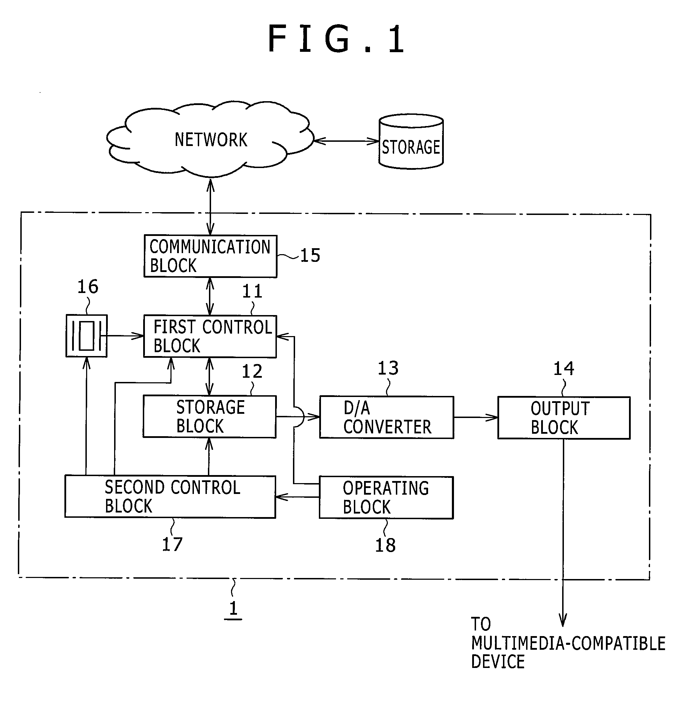

The disclosure disclosed herein will be described in further detail by way of a preferred embodiment thereof with reference to the accompanying drawings. As illustrated in FIG. 1, a data storage apparatus 1 practiced as a preferred embodiment of the present disclosure is configured by including a first control block 11, a storage block 12, a digital/analog (D/A) converter 13, an output block 14, a communication block 15, a clock generation block 16, a second control block 17, and an operating block 18.

The first control block 11 (corresponding to a control block of the present disclosure) is a program-controlled device such as a CPU and therefore operates according to the instructions of a program stored in the storage block 12. The first control block 11 of the present embodiment receives a clock signal generated by the clock generation block 16. The first control block 11 executes instructions included in the program with the timing specified by the clock signal.

In one example of the present embodiment, the first control block 11 controls the communication block 15 to get multimedia data from a storage device (an NAS (Network Attached Storage) for example) connected to the data storage apparatus 1 through a network. Next, the first control block 11 stores the obtained multimedia data into the storage block 12. The multimedia data include music data obtained by digitizing audio signals and video data obtained by digitizing video signals having video and audio signals, for example. According to an instruction given by a user, the first control block 11 gets multimedia data (one or more pieces of data) and stores the obtained multimedia data sequentially into the storage block 12.

In another example of the present embodiment, in storing multimedia data (if there are two or more pieces of data, each piece of multimedia data) into the storage block 12, the first control block 11 may get address information indicative of the storage location of each piece of multimedia data in the storage block 12 and output the obtained address information to the second control block 17. The address information indicative of data storage locations may be a start address indicative of the storage start location of each piece of multimedia data or information that includes the storage start location (or the start address) and the storage end location (may be the address of the end position itself or may be indicated by a data size) of each piece of multimedia data, for example.

The storage block 12 (corresponding to a storage block of the present disclosure) is a memory device that is configured by a RAM (Random Access Memory) or a flash memory, for example. In the present embodiment, the storage block 12 holds programs that are executed by the first control block 11 and operates as a work memory for the first control block 11. In addition, the storage block 12 receives multimedia data to be stored from the first control block 11 and writes the received multimedia data to the flash memory for example.

Further, in the present embodiment, receiving a data read address specification and a data read request from the first control block 11 or the second control block 17, the storage block 12 reads the data stored at the specified address and outputs the read data to the D/A converter 13.

The D/A converter 13 converts entered digital data into an analog signal (an electric signal that provides a voltage value corresponding to the digital data, for example) and outputs the resultant analog signal to the output block 14. The output block 14 (corresponding to a dedicated output block of the present disclosure) receives the analog signal from the D/A converter 13 and outputs the received analog signal to an external device. This output block 14 includes an amplifier and a signal input/output terminal (an RCA (Radio Corporation of America) terminal, for example) and is connected to external multimedia-compatible devices such as an audio device and a video monitor device.

The communication block 15 is a network interface that transmits data via a network according to the commands entered from the first control block 11. In addition, the communication block 15 outputs data received via a network to the first control block 11. This communication block 15 corresponds to an input/output block in the present disclosure. The clock generation block 16 generates predetermined clock signals and supplies the generated clock signals to the first control block 11.

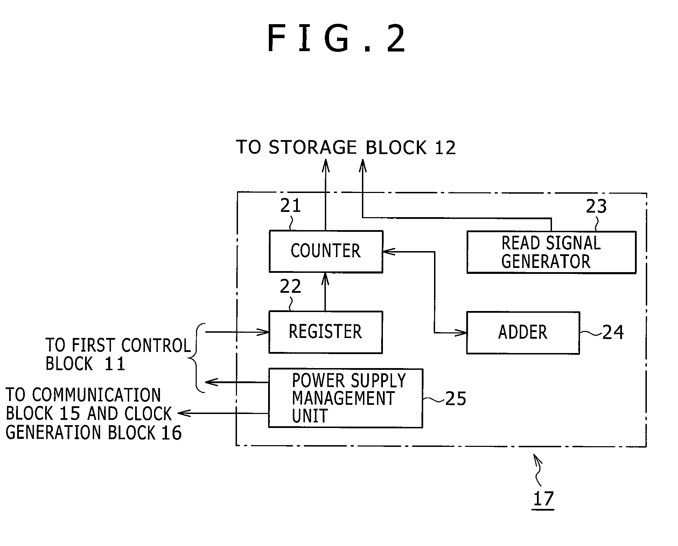

The second control block 17 reads multimedia data from the storage block 12 and outputs the read multimedia data without control of the first control block 11; to be more specific as shown in FIG. 2, the second control block 17 is configured by including a counter 21, a register 22, a read signal generator 23, an adder 24, and a power supply management unit 25. In addition, the second control block 17 receives instructions such as start reproduction, pause, stop reproduction, fast forward, rewind, skip forward, and skip backward, as user instructive operations from the operating block 18 to be described later.

The counter 21 stores a count value and increments the count value by "1" with each predetermined timing. In the present embodiment, the count value stored in the counter 21 corresponds to each read address in the storage block 12.

When the user gives an instruction of the reproduction of multimedia data, the counter 21 determines an initial value by a predetermined method. Then, the counter 21 sets a determined initial value as a count value and, while incrementing the count value by "1" from the initial count value with a predetermined timing, reads each incremented count value, thereby outputting the read count value to the storage block 12 as an address. It should be noted that the above-mentioned initial count value determination method by the counter 21 may be one in which a count value is set to the start address of an area in the storage block 12 in which multimedia data is stored (for example, an initial count value may be set in advance). Another initial count value setting method will be described later.

If a pause instruction is given by the user, the counter 21 stops an increment operation. Further, if a reproduction instruction is given by the user after a pause command, the counter 21 restarts an increment operation.

When address information indicative of the storage location of each piece of multimedia data comes from the first control block 11, the register 22 stores the received address information. It should be noted that the register 22 is not always necessary in the present embodiment unless multimedia data cueing processing to be described later is executed.

The read signal generator 23 (corresponding to a signal output block of the present disclosure) outputs a request signal (or a read signal) to the storage block 12 for the reading of multimedia data stored in the storage block 12 when a multimedia data reproduction instruction is given by the user. In addition, receiving a reproduction stop instruction from the user, the read signal generator 23 stops outputting a read signal. The above-mentioned counter 21 and read signal generator 23 correspond to the dedicated output block in the present disclosure.

The adder 24 receives a fast forward instruction or a rewind instruction given by the user. If a fast forward instruction comes, the adder 24 adds a predetermined value to a count value of the counter 21. If a rewind instruction is given, the adder 24 subtracts a predetermined value from a count value of the counter 21.

The power supply management unit 25 is one example of an operation control block of the present disclosure. When a reproduction start instruction is given by the user, the power supply management unit 25 stops the operations of the first control block 11, the communication block 15, and the clock generation block 16. To be more specific, power supply management unit 25 stops the power supply to the first control block 11, the communication block 15, and the clock generation block 16. Further, if a reproduction stop instruction is given by the user, the power supply management unit 25 starts the operations of the first control block 11, communication block 15, and the clock generation block 16. In this start control operation, power supply to the first control block 11, the communication block 15, and the clock generation block 16, for example, is started.

The operating block 18 is configured by including operation buttons and the like through which the user gives instruction such as start reproduction, pause, stop reproduction, fast forward, rewind, skip forward, and skip backward as instructive operations by the user. The operating block 18 outputs these instructions to the second control block 17.

The data storage apparatus 1 of the present embodiment has the configuration described above and operates as follows. First, in the data storage apparatus 1, the first control block 11 receives a clock signal generated by the clock generation block 16 and operates accordingly. Then, the first control block 11 controls the communication block 15 to get multimedia data from a storage device connected to the data storage apparatus 1 via a network and sequentially stores the obtained multimedia data into the storage block 12.

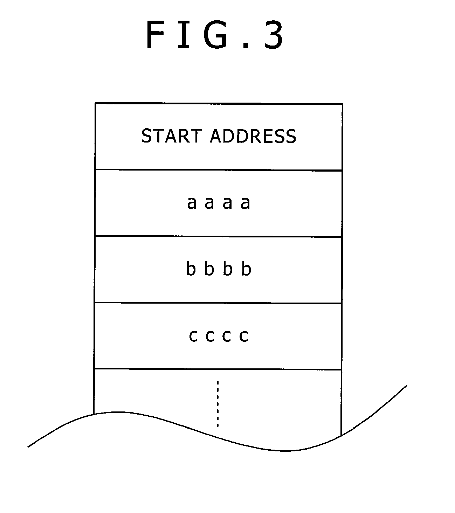

At this moment, the first control block 11 outputs each start address (the address of the storage block 12) of the multimedia data stored in the storage block 12 to the second control block 17. The second control block 17 stores a list of the start addresses into the register 22 (refer to FIG. 3).

When the user gives an instruction of the start of multimedia data reproduction, the second control block 17 shuts the power supply to the first control block 11, communication block 15, and the clock generation block 16 (if there is processing to be executed before the shutdown of the power supply in an operation being executed by the first control block 11, then this processing may be executed before the shutdown). Then, the second control block 17 gets the start address stored first in the register 22.

The second control block 17 sets the obtained start address as an initial value of the counter 21 and outputs the count value of the counter 21 to the storage block 12 as an address signal, and supplies a read signal to the storage block 12 through the read signal generator 23. Consequently, part of the multimedia data is read from the address indicated by this count value in the storage block 12.

The second control block 17 outputs the data read from the storage block 12 to the D/A converter 13 and then outputs a resultant analog signal to a multimedia-compatible device. Subsequently, the second control block 17 increments the count value of the counter 21 by "1" with a predetermined timing, outputting an incremented count value to the storage block 12 as an address signal. Consequently, the multimedia data are sequentially read from the storage block 12 to be reproduced.

At this moment, the operations of the first control block 11 and so on are in the stopped state, so that the noise generated by each block to which power supply is shut off does not affect a signal obtained by the reproduction of multimedia data.

When the user gives an instruction of fast forward or rewind for example, the second control block 17 subsequently adds a predetermined value (a two or more positive value for fast forward or a negative value for rewind) to the count value of the counter 21 and outputs each value after addition to the storage block 12 as an address signal. Consequently, the multimedia reproduction location in the storage block 12 is fast forwarded or rewound, thereby reproducing the data at each location.

Further, in the present embodiment, when the user gives an instruction of skipping to the immediately following data, the second control block 17 references the register 22 to read the start address that is greater than the count value at the time of the instruction of the counter 21 and nearest to the count value among the start addresses of the multimedia data stored in the register 22. If no start address greater than the count value at the time of the instruction of the counter 21 is found in the register 22, then the user instruction may be ignored or an error notification may be transmitted to the user.

Reading the start address, the second control block 17 sets the count value of the counter 21 as the value of the read start address and outputs the count value of the counter 21 to the storage block 12 as an address signal. Subsequently, the second control block 17 increments the count value of the counter 21 by "1" with a predetermined timing and outputs the resultant count value to the storage block 12 as an address signal. Consequently, the immediately following multimedia data are subsequently read for reproduction.

When the user gives an instruction of skipping to the immediately preceding data, the second control block 17 references the register 22 to read the start address that is smaller than the count value at the time of the instruction of the counter 21 and nearest to the count value among the start addresses of the multimedia data stored in the register 22 and sets the read start address as the value of the counter 21, thereby executing the processing in the same manner as that of the skipping to the immediately following data.

Further, if the user executes a pause operation, then the second control block 17 stops the increment operation of the counter 21 and, at the same time, stops the supply of a read signal from the read signal generator 23. Next, if a reproduction restart command is issued by the user, then the second control block 17 restarts an increment operation of the counter 21 and, at the same time, restarts the supply of a read signal from the read signal generator 23.

If the user issues a command of stop reproduction, then the second control block 17 stops the increment operation of the counter 21 and, at the same time, stops the supply of a read signal from the read signal generator 23. In addition, in this case, the second control block 17 starts the supply of power to the first control block 11, the communication block 15, and the clock generation block 16.

## Claims

1. A data storage apparatus comprising:
a storage block (12) arranged to store multimedia data;
a control block (11) arranged to execute a read/write operation with multimedia data;
an input/output block (15) arranged to execute a data input/output operation between the control block (11) and an external apparatus;
a dedicated output block (14, 17) arranged to read the multimedia data stored in the storage block (12) and to output the read multimedia data to an external multimedia-compatible device without the control of the control block (11); and
an operation control block (25) arranged to execute one of the operations of stopping and starting operations of said control block (11) and said input/output block (15).

2. The data storage apparatus according to claim 1, **characterized in that** it further comprises
a clock generation block (16) arranged to supply a clock signal to the control block (11);
the control block (11) being arranged to operate on the basis of a clock signal generated by the clock generation block (16); and
the operation control block (25) being arranged to stop the clock generation block (16) when stopping an operation of said control block (11).

3. The data storage apparatus according to claim 1 or 2, **characterized in that**
the dedicated output block (14, 17) has a counter (21) arranged to indicate a data storage location in the storage block (12) and a signal output block (23) that outputs a read signal from a data storage location indicated by the counter (21).
